(19) Europäisches Patentamt
European Patent Office
Office européen des brevets

(11) **EP 0 950 359 A1**

(12) **EUROPÄISCHE PATENTANMELDUNG**

(43) Veröffentlichungstag:
20.10.1999 Patentblatt 1999/42

(51) Int. Cl.$^6$: **A23L 2/02**, A23L 2/58

(21) Anmeldenummer: 98120304.5

(22) Anmeldetag: 27.10.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 14.04.1998 DE 19816416

(71) Anmelder: Frühstücks-Drink GmbH
89180 Berghülen (DE)

(72) Erfinder: **Michalka, Sabine**
89180 Berghülen (DE)

(74) Vertreter:
**Mammel, Ulrike, Dr. Dipl.-Chem. et al
Kinkelin, Mammel und Maser
Patentanwälte
Weimarer Strasse 32/34
71065 Sindelfingen (DE)**

(54) **Mehrfruchtgetränk mit roter Farbe**

(57) Die Erfindung betrifft ein Mehrfruchtgetränk, das verschiedene Fruchtsäfte und ggf. Fruchtmarke umfaßt und mit Ballaststoffen und Vitaminen angereichert ist, wobei zur Erzielung einer farblich homogenen Rotfärbung Provitamin A zusammen mit einem roten Farbstoff bzw. Farbstoffgemisch aus der Gruppe der Carotinoide zugesetzt wird.

Die Erfindung betrifft auch ein Verfahren zur Herstellung eines Mehrfruchtgetränks.

EP 0 950 359 A1

**Beschreibung**

Die Erfindung betrifft ein mit Ballaststoffen und Vitaminen bzw. Provitaminen ange-reichertes Mehrfruchtgetränk und ein Verfahren zu seiner Herstellung.

Bei den Verbrauchern erfreuen sich Mehrfruchtgetränke mit neuen Geschmacksrichtungen, die verschiedene Fruchtsäfte, ggf. Fruchtmarke, sowie Vitamine, Provitamine und Ballaststoffe enthalten, zunehmender Beliebtheit.

Damit Mehrfruchtgetränke marktfähig sind und auch von den Käufern angenommen werden, sind jedoch über die erzielte Geschmacksrichtung des Getränks hinaus noch eine Vielzahl weiterer Bedingungen zu erfüllen: Selbstverständlich müssen die einzelnen Bestandteile des Mehrfruchtgetränks untereinander verträglich sein, d. h. es dürfen keine Reaktionen der Inhaltsstoffe miteinander stattfinden, so daß bis Ende des Mindesthaltbarkeitsdatums der Gebrauchswert erhalten bleibt.

Die Herstellung solcher Mehrfruchtgetränke, die Ballaststoffe umfassen und mit Vitaminen, Provitaminen angereichert sind, erfordert aufgrund des hohen Wasserverbindevermögens (Hydratisierung) der Ballaststoffe spezielle technologische Schritte, um öllösliche Bestandteile im Mehrfruchtgetränk homogen zu verteilen.

Wesentlich ist auch, daß angereicherte Mehrfruchtgetränke - bis auf das Absetzen des Fruchtfleisches und der Ballaststoffe, was die Verbraucher überwiegend als Qualitätsmerkmal positiv beurteilen - über einen langen Zeitraum die Homogenität bewahren.

Ein ebenfalls sehr wesentliches Kriterium solcher Mehrfruchtgetränke für den Verbraucher ist weiterhin die Farbe des Getränks, denn diese stellt bei Früchten enthaltenden Getränken das Qualitätsmerkmal dar, das der Verbraucher, im allgemeinen eher unbewußt als bewußt, als erstes zur Kenntnis nimmt, noch bevor eine Beurteilung mittels der olfaktorischen und gustatorischen Sinnesorgane erfolgt. Der Verbraucher weiß, daß die Veränderung der Farbe von Früchte enthaltenden Getränken häufig mit negativen Veränderungen anderer Qualitätsmerkmale verbunden ist.

Die Bereitstellung neuer Mehrfruchtgetränke mit neuen Geschmacksrichtungen scheitert häufig daran, daß eine neue Getränkekomposition mit angenehmem Geschmack beispielsweise wegen einer unerwünschten Farbe vom Verbraucher abgelehnt wird. So führt die Verwendung von roten oder rotviolett-farbenen Fruchtsäften wie Kirsch- und Erdbeersaft oder -mark in Mehrfruchtgetränken zur Braunfärbung. Zu einer unerwünschten Braunfärbung in solchen Mehrfruchtgetränken kommt es ebenfalls, wenn rotviolettfarbige Säfte zusammen mit Provitamin A eingesetzt werden.

Braungefärbte Getränke signalisieren dem Verbraucher ein „altes" oder „verdorbendes" Getränk, so daß solch ein Getränk nicht marktfähig ist.

Versuche, die unerwünschte Braunfärbung durch natürliche Farbstoffe bzw. Farbextrakte, wie beispielsweise aus der Gruppe der Anthocyanfarbstoffe, zu kompensieren, waren nicht erfolgreich: In dem chemisch äußerst komplexen Gemisch wiesen die Anthocyanfarbstoffe gegenüber anderen Einzelkomponenten nicht die genügende Stabilität auf, so daß sich diese Farbstoffe und somit das gesamte Getränk mit der Zeit unter Bildung eines braungefärbten Produktes veränderten.

Andere künstliche rote Farbstoffe sind in Mehrfruchtgetränken, die mit Vitamin C angereichert sind, ebenfalls nicht hinreichend beständig.

Die Aufgabe der Erfindung besteht darin, ein mit Ballaststoffen und Vitaminen angereichertes Mehrfruchtgetränk aus Fruchtsäften und ggf. Fruchtmark bereitzustellen, das auch bei Zusatz von roten/rotvioletten Fruchtsäften eine ansprechende Farbe aufweist, wobei das Mehrfruchtgetränk über einen langen Zeitraum haltbar, wohlschmeckend und keinen Farbveränderungen unterworfen sein darf, die Homogenität im wesentlichen beibehalten, die lebensmittelrechtlichen Vorschriften erfüllen und zudem kostengünstig herstellbar sein sollte.

Diese Aufgabe wird durch die Merkmale des Anspruchs 1 gelöst.

Erstaunlicherweise wurde festgestellt, daß durch die gemeinsame Verwendung der Carotinoide zusammen mit dem Pro-vitamin A die unerwünschte Braunfärbung, auch bei Zusätzen von Kirsch- und Erdbeersaft, vermieden wird, ohne daß das Mehrfruchtgetränk innerhalb des Mindesthaltbarkeitsdatums an Gebrauchswert verlieren würde.

Das erfindungsgemäße Mehrfruchtgetränk ist auch bei Zusatz von nicht lagerstabilen Fruchtsäften und/oder -marken durch die Kombination des Provitamin A zusammen mit den roten Carotinoiden über eine Zeitdauer von 1 ½ Jahren von intensiver Farbe, wohlschmeckend, die Homogenität bleibt erhalten, und es ist wirtschaftlich herstellbar.

Ein weiterer Vorteil des erfindungsgemäßen roten Mehrfruchtgetränkes besteht darin, daß es nicht mehr mit bekannten Mehrfruchtgetränken, die häufig wie Oran-gensaft aussehen, verwechselt werden kann, insbesondere, wenn das Etikett des Getränkes fehlt oder schlecht lesbar ist.

Der Verbraucher hat somit optisch die Möglichkeit, dieses Getränk wegen seiner außergewöhnlich ansprechenden Farbe von anderen Getränken zu unterscheiden.

Prinzipiell können als rote Farbstoffe/ Farbstoffgemische aus der Gruppe der Carotinoide die bekannten, zugänglichen, natürlichen oder synthetischen Vertreter dieser Klasse von Verbindungen, die als farbgebende Mittel brauchbar sind, eingesetzt werden, z. B. Lycopin, Bixin, Zeaxanthin, Cryptoxanthin, Citranaxanthin, Lutein, Canthaxanthin, Astaxanthin, β-Apo-4'-carotinal, β-Apo-8'-carotinal, ß-Apo-12'-carotinal, β-Apo-8'-carotinsäure sowie Ester von hydroxy- und carboxylhaltigen Vertretern dieser Gruppe, z. B. die niederen Alkylester und vorzugsweise die Methyl- und Ethylester.

Erstaunlicherweise wurde festgestellt, daß es möglich ist, ein wohlschmeckendes und ansprechend rot gefärbtes Mehrfruchtgetränk unter Verwendung von Paprikaextrakt als carotinoidem Farbstoff zu erhalten.

Um die gewünschte Färbung zu erreichen, sind relativ hohe Farbstoffkonzentrationen erforderlich. Die Konzentration an Paprikaextrakt, die in dem erfindungsgemäßen Mehrfruchtgetränk eingesetzt wird, ist so hoch, daß das Getränk wegen des im Paprikaextrakt enthaltenen Capsaicins für ein Mehrfruchtgetränk unangenehm scharf schmecken müßte. Erstaunlicherweise wurde festgestellt, daß das Getränk trotz der hohen Konzentration an Paprikaextrakt keinen scharfen Geschmack aufweist, was auf die in dem Mehrfruchtgetränk ebenfalls enthaltenen Ballaststoffe zurückzuführen ist. Darüber hinaus wird der zur Färbung eingesetzte Paprikaextrakt sensorisch gut überdeckt durch die Ausgewogenheit der eingesetzten Fruchtkonzentrate, Pulpen, Pürees und Ballaststoffe und durch eine ausgewogene fruchtige Aromatisierung mit leicht betonter Erdbeernote.

Das Absorptionsspektrum des Paprikaextrakts zeichnet sich durch ein Absorptionsmaximum bei etwa 457 nm und einem weiteren Nebenmaximum bzw. einer Schulter bei etwa 470 - 480 nm aus, wobei der Extinktionskoeffizient bei 470 - 480 nm wenigstens 90 % des Extinktionskoeffizienten bei 457 nm beträgt. Die gesamte Absorptionsbande ist insbesondere im langwelligen Bereich sehr breit: 50 % des bei 457 nm gemessenen Extinktionskoeffizienten einer Paprikaextraktlösung wird bei 505 nm oder gar längerwellig gemessen, 25 % des bei 457 nm gemessenen Extinktionskoeffizienten wird bei 520 nm oder längerwellig beobachtet. Es ist anzunehmen, daß diese langwelligen Absorption des Paprikaextraktes zu der Rotfärbung des erfindungsgemäßen Mehrfruchtgetränks beitragen.

Der vorzugsweise eingesetzte Paprikaextrakt weist einen Pigmentanteil von ca. 5% Gesamtcarotinoiden auf, nämlich etwa 3,0 bis 3,5 % Capsanthin, 0,4 bis 0,5 % Capsorubin, 0,6 bis 0,65 % $\beta$-Carotin, 0,4 bis 0,45 Zeaxanthin, 0,2 bis 0,25 % Cryptoxanthin. Weiterhin sind in dem Paprikaextrakt Violaxanthin und isomere Carotinoide in Spuren enthalten. Die Capsaicin-Konzentration des Paprikaextraktes sollte 0,01 % nicht überschreiten.

Die Konzentration an Paprikaextrakt in dem erfindungsgemäßen Mehrfruchtgetränk sollte zwischen 0,1 - 5,0 g/l Paprikaextrakt, vorzugsweise 0,2 - 3,0 g/l, besonders bevorzugt 0,4 - 2,0 g/l betragen. Eine Konzentration von 0,5 - 2,0 g/l Paprikaextrakt entspricht etwa einer Capsanthin-Konzentration von 0,015 - 0,06 g/l.

Selbstverständlich ist es ebenfalls möglich, das Mehrfruchtgetränk nur mit Capsanthin als Carotinoid zu färben oder eine Kombination verschiedener im Paprikaextrakt enthaltener Carotinoide zu verwenden.

Das Provitamin A, das gemeinsam mit dem roten Carotinoiden zu der gewünschten Farbe beiträgt, ist gegenüber allen anderen in dem Mehrfruchtgetränk enthaltenen Stoffen ebenfalls hinreichend stabil und die Farbe bleibt über das Mindesthaltbarkeitsdatum hinaus erhalten. Das eingesetzte Provitamin A sollte ein Absorptionsmaximum bei etwa 457 ± 5 nm aufweisen und von gelber bis roter Farbe sein.

Besonders bevorzugt ist, daß das Provitamin A all-trans-$\beta$-Carotin ist, das im Verhältnis von 6:1 als Vitamin A umzurechnen ist.

Vorzugsweise wird das Provitamin A in Form von Mikrokapseln zugesetzt, in denen mikro- und/oder nanokristallines oder amorphes all-trans-$\beta$-Carotin von einer aus Schutzkolloiden wie Gelatine und Sorbitol bestehenden Kapsel umgeben ist, wobei Natriumascorbat als Antioxidant und Tricalciumphosphat zugesetzt sind. Dieses all-trans-$\beta$-Carotin wird von der Firma BASF unter dem Handelsnamen Lucarotin vertrieben, das in unterschiedlichen Korngrößen erhältlich ist. Insbesondere hat sich die Verwendung von Lucarotin 10 CWG G/R bewährt.

Nach Herstellerangaben ist die Teilchengröße dieses Produkts wie folgt: 100 % durch 20 mesh USP (850 $\mu$m), mind. 95 % durch 40 mesh USP (425 $\mu$m) und maximal 12 % durch 120 mesh USP (125 $\mu$m). Es handelt sich um dunkelrote feine sphärische Partikel.

Die Konzentration an Provitamin A sollte zwischen 720 $\mu$g/100ml und 5.500 $\mu$g/100ml, vorzugsweise zwischen 2.500 $\mu$g/100ml und 5.000 $\mu$g/100ml und besonders bevorzugt zwischen 3.000 $\mu$g/100ml und 4.200 $\mu$g/100ml betragen.

Als Ballaststoffe können beispielsweise Haferrohfasern, Weizenfasern, Weizenkleie, Leinsamen, Haferkleie, Ballaststoffe aus Orangen, Datteln, Feigen, Trockenpflaumen oder auch Pektine verwendet werden.

Die Ballaststoffe werden in einer Konzentration von 3 g/l bis 10 g/l, Vorzugsweise von 6 g/l bis 9 g/l und besonders bevorzugt etwa 7,5 g/l eingesetzt. Die Haferrohfasern nehmen Feuchtigkeit auf, aber ihre Quelleigenschaft ist vergleichsweise gering. Der Zusatz von Haferrohfasern und ähnlichen unlöslichen Ballaststoffen hat keinen wesentlichen Einfluß auf die Viskosität des Mehrfruchtgetränks.

Als Pektine können beispielsweise Zitruspektine und Obstpektine verwendet werden, wobei das Citruspektin und Apfelpektin besonders bevorzugt ist. Die Pektine verhindern auch die Entmischung des Produkts sowohl hinsichtlich einer wäßrigen und öligen Phase, als auch einer sonstigen Entmischung. Durch Erhöhung des Pektinanteils kann auch die Viskosität des Mehrfruchtgetränks erhöht werden. Das Verhältnis von Rohfaser zu Pektin beträgt vorzugsweise etwa 2 : 1.

Ein weiterer Vorteil der Pektine und der Haferrohfasern ist, daß sie cholesterinsenkend wirken.

Als Fruchtsäfte kann das Mehrfruchtgetränk beispielsweise bevorzugt Orangensatt, Apfelsaft, Mandarinensaft, Ananassaft, Zitronensaft, Erdbeersaft, Kirschsaft, Bananensaft oder auch andere Fruchtsäfte enthalten.

Als Fruchtmark wird bevorzugt Bananenmark eingesetzt. Es können auch andere Fruchtmarke verwendet werden.

Durch die Verwendung von Bananenmark wird das Getränk einerseits mit Ballaststoffen angereichert, und weiterhin führt das Bananenmark auch zu der vom Verbraucher gewünschten Sämigkeit des Produkts. Auch wird der von den Fruchtsäuren stammende Säureeindruck abgemildert.

Das Bananenmark ist in dem Mehrfruchtgetränk vorzugsweise in einer Konzentration von 10 ± 5 % enthalten.

Da das erfindungsgemäße Mehrfruchtgetränk neben den fruchteigenen Zuckern nur Süßstoffe aufweist, ist die Kalorienzahl reduziert. Dennoch schmeckt es wegen der Ballaststoffe und den fruchteigenen Zuckern in keinster Weise „nach Süßstoff".

Das Mehrfruchtgetränk kann auch mit Vitamin C und Vitamin E oder auch mit anderen Vitaminen angereichert werden. Hierbei ist ein Zusatz von 450 mg/l Vitamin C und 75 mg/l Vitamin E, entsprechend 75 % der empfohlenen Tagesdo-sis bei Konsum von 100 ml des Mehrfruchtgetränks, vorgesehen.

Prinzipiell ist es auch möglich, dem erfindungsgemäßen Mehrfruchtgetränk weitere Stoffe zuzusetzen, wie beispielsweise $\Omega$-3-Fettsäuren.

Das Mehrfruchtgetränk weist einen nach DIN 6174 bestimmten L*-Wert im Bereich zwischen 34 und 52, vorzugsweise zwischen 37 und 49 auf, besonders bevorzugt sind 43 ± 3. Generell sind aber auch L*-Werte zwischen 32 und 54 möglich.

Der nach DIN 6174 gemessene a*-Wert sollte zwischen 25 und 43, vorzugsweise zwischen 28 und 40 und besonders bevorzugt zwischen 34 ± 3 betragen.

Der nach DIN 6174 gemessene b*-Wert sollte zwischen 48 und 66, vorzugsweise 51 und 63, besonders bevorzugt 57 ± 3 betragen.

Der Quotient b*/a* sollte zwischen 0,70 und 2,5, vorzugsweise zwischen 1,0 und 2,2 und besonders bevorzugt 1,5 ± 0,4 betragen, wobei b* und a* jeweils positiv sind.

Die Messung der L*-, a*- und b*-Werte erfolgte in dem Reflektometer Tricolor LMF3 der Fa. Lange mit Normlicht C, Meßgeometrie 45°/0° Reflexion, in Küvelten der Firma Müller & Müller, Holzminden, die bei einer Füllhöhe von ca. 3 cm gegen weißen Hintergrund gemessen wurden. Die Messung der jeweiligen Proben erfolgte unmittelbar nach dem Einfüllen in die Küvette, um eine Verfälschung der Meßwerte durch ein „Absetzen" zu verhindern.

Die Viskosität des Mehrfruchtgetränks sollte zwischen 8 Cps und 15 Cps betragen.

Die Erfindung betrifft auch ein Verfahren zur Herstellung des erfindungsgemäßen Mehrfruchtgetränks.

Die Erfindung wird nachfolgend durch ein Ausführungsbeispiel beschrieben:

**Rezeptur Mehrfruchtgetränk A**

a) <u>Zusammensetzung der Fruchtsäfte und Fruchtmarke</u>

24 % Apfelsaft, 15 % Orangensaft, 10 % Bananenmark, 5 % Ananassaft, 3 % Mandarinensaft, 1 % Zitronensaft, 1 % Erdbeersaft, 1% Sauerkirschsaft. Der Saftanteil beträgt 60%.

b) <u>Weitere Bestandteile</u>

7,5 g/l Ballaststoffe aus Pektin und Haferrohfaser und Fruchtbestandteilen
0,5 - 2 g/l Paprikaextrakt
Stabilisatoren: vorzugsweise Guarkernmehl, Gummi arabicum (200 - 1000 mg/l)
0,02-2,0 g/l Aroma
400 - 700 mg/l Vitamin C
Süßstoffe: 160 - 200 mg/l Natriumcyclamat und 16 - 20 mg/l Saccharin-Natrium
60-90 mg/l Vitamin E
30 - 42 mg/l Provitamin A entsprechend mindestens 300 - 420 mg/l Lucarotin 10 CWG G/R (BASF).

Dieses Mehrfruchtgetränk A, das mit Ballaststoffen und Vitaminen bzw. Provitaminen angereichert ist, wurde verschiedenen Untersuchungen unterzogen und mit einem bekannten „gelb-orange-farbenen" Mehrfruchtgetränk, nachfolgend „Ver-gleichsmehrfruchtgetränk", verglichen, das aus Ananas-, Apfel-, Orangen-, Trauben-, Mandarinen- und Zitronensaft, Bananenmark, Ballaststoffen, Vitamin C, Süßstoff Cyclamat und Saccharin, natürlichem Aroma, Vitamin E, Provitamin A und Wasser besteht.

<u>Sensorik</u>

Es zeigen

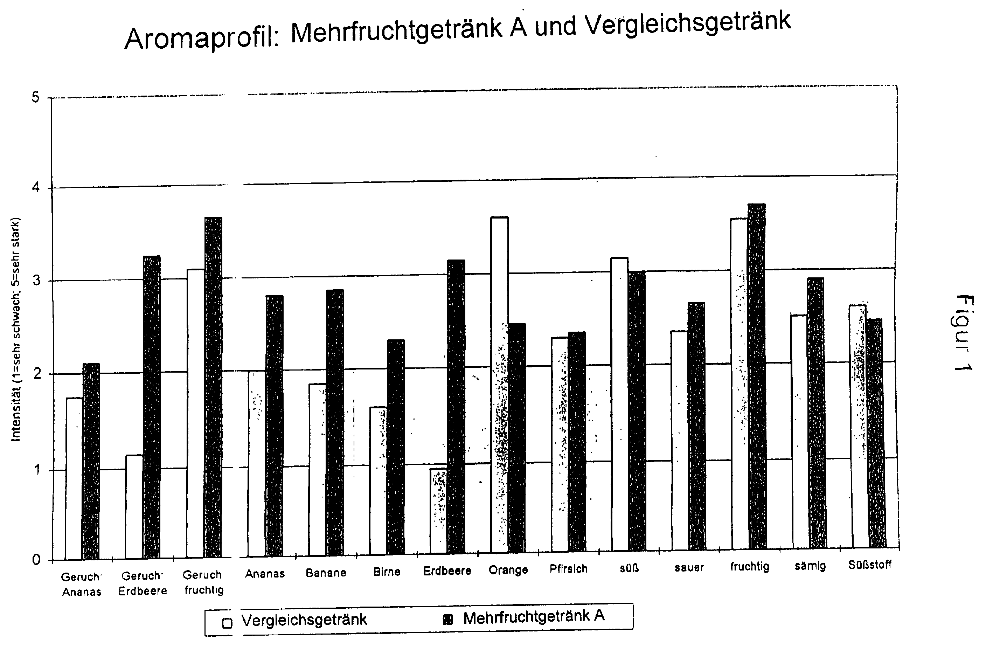

Fig. 1 das Aromaprofil des Mehrfruchtgetränks A im Balkendiagramm im Vergleich zu dem Vergleichsmehrfruchtgetränk und

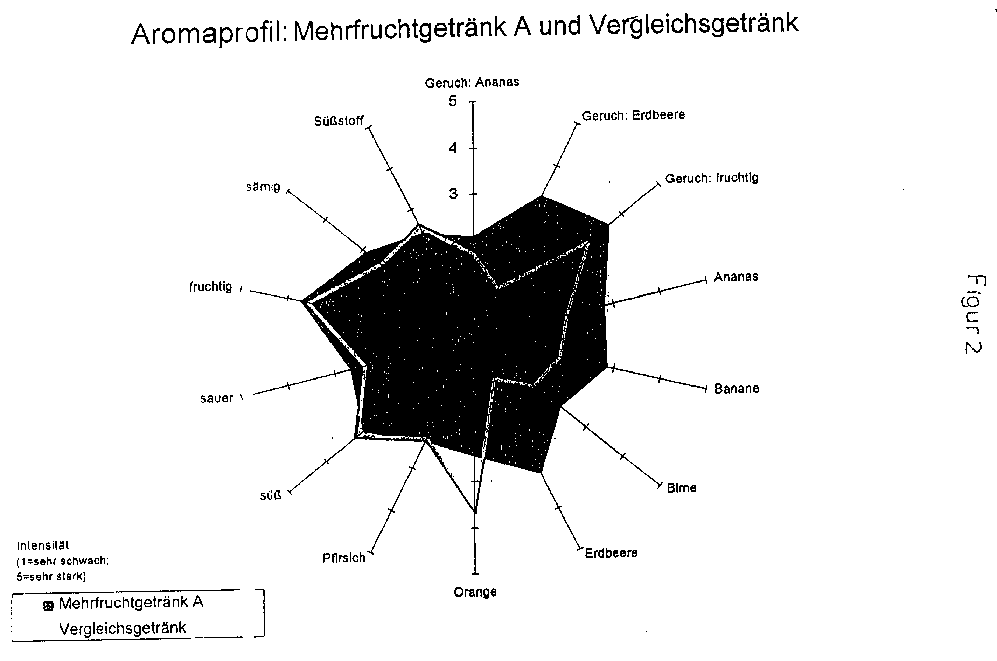

Fig. 2 das Aromaprofil des Mehrfruchtgetränks A im Spinnendiagramm im Vergleich zu dem Vergleichsmehrfruchtgetränk.

Das Mehrfruchtgetränk A weist im Vergleich zu dem „Vergleichsmehrfruchtgetränk" einen deutlichen fruchtigen Geruch nach Erdbeere auf. Auch kommt das Ananas-, Bananen, Birnen- und Erdbeeraroma des Mehrfruchtgetränks A im Geschmack deutlich stärker zur Geltung.

Farbmessung

Das Mehrfruchtgetränk A weist eine intensive rote Farbe auf. Zur näheren Charakterisierung wurde es mehreren Farbmessungen unterzogen und die L*-, a*- und b*-Werte nach DIN 6174 ermittelt: L* = 43 ; a* = 34; b* = 57 . Der Quotient b*/a* beträgt somit etwa 1,67. Diese Farbe entspricht etwa RAL 2010.

Vergleichsmessung

Bei dem „Vergleichsmehrfruchtgetränk" von der Farbe gelb-orange ohne Zusatz von Kirschsaft, Erdbeersaft und den roten Carotinoiden wurde L* = 51 ± 3, a* = 14 ± 5, b*= 68 ± 5 ermittelt. Der Quotient b* / a* beträgt etwa 4,8 ± 1,7.

Viskositätsmessung

Das Mehrfruchtgetränk A wurde einer Viskositätsmessung unterzogen und es wurde eine Viskosität von 8,20 Cps bestimmt.
Die Viskosität des Mehrfruchtgetränks kann durch Zugabe von Verdickungsmitteln eingestellt werden, wobei die Viskosität zwischen 8 Cps und 16 Cps betragen sollte.

Herstellungsverfahren

Das erfindungsgemäße Mehrfruchtgetränk A wird wie folgt hergestellt:
Zunächst werden separat einerseits die wasserlöslichen bzw. die wasserdispergierbaren Komponenten in einer „wäßrigen Vorlösung" und die öllöslichen Komponenten miteinander in einer „öllöslichen Vorlösung" getrennt voneinander hergestellt.
Anschließend werden beide Vorlösungen mit den weiteren Komponenten gemischt. Diese Mischung wird dann bei einem Druck von wenigstens 20 bar und höchstens 220 bar hochdruckhomogenisiert, woran sich als weiterer Schritt eine Kurzzeiterhitzung (KZE) der homogenisierten Mischung bei wenigstens 85° C anschließt, um vorhandene Keime abzutöten.
Zu dieser Mischung („Grundstoff") werden weitere Fruchtsaftkonzentrate und - marke (Apfelsaft, Orangensaft, Bananenmark und Sauerkirschsaft) hinzugefügt, mit Wasser auf Getränkestärke verdünnt und anschließend homogen gemischt.
Nach einer üblicherweise angewendeten Pasteurisation wird das Mehrfruchtgetränk heiß in Flaschen abgefüllt, gekühlt und versandfertig verpackt.
Neben der Messung der L*-, a*- und b*-Werte des Mehrfruchtgetränks wurden auch die L*, a* und b*-Werte des Grundstoffes, der bis auf den Zusatz von Apfel-, Orangen- und Sauerkirschsaft und Bananenmark und Verdünnung mit Wasser der Rezeptur A entspricht, gemessen. Die Meßwerte des Grundstoffs liegen für L* etwa bei 37 ± 3, für a* etwa bei 38 ± 3 und für b* etwa bei 55 ± 3 und für b*/a* etwa bei 1,45 ± 0,30. Die Schwankungen der ΔL*, Δa* und Δb* um die L*, a* und b*-Werte können jedoch jeweils ebenfalls auch ± 6 oder ± 9 betragen. Die Schwankung von Δb*/a* kann ebenso ± 0,6 um den angegebenen Mittelwert betragen.

**Patentansprüche**

1.  Mehrfruchtgetränk, das verschiedene Fruchtsäfte und ggf. Fruchtmarke umfaßt und mit Ballaststoffen und Vitaminen angereichert ist, dadurch gekennzeichnet, daß zur Erzielung einer farblich homogenen Rotfärbung Provitamin A zusammen mit einem roten Farbstoff bzw. Farbstoffgemisch aus der Gruppe der Carotinoide zugesetzt wird.

2.  Mehrfruchtgetränk nach Anspruch 1, dadurch gekennzeichnet, daß der/die roten Farbstoffe bzw. Farbstoffgemische aus der Gruppe der Carotinoide ausgewählt werden aus: Capsanthin, Lycopin, Capsorubin, Zeaxanthin, Cryptoxanthin, Violaxanthin, Lycopin, Bixin, Citranaxanthin, Lutein, Canthaxanthin, Astaxanthin, β-Apo-4'-carotinal, β-Apo-8'-carotinal, β-Apo-12'-carotinal, β-Apo-8'-carotinsäure sowie Estern von hydroxy- und carboxylhaltigen Vertretern dieser Gruppe sowie deren Isomeren.

3.  Mehrfruchtgetränk nach Anspruch 1 oder 2, dadurch gekennzeichnet, daß das rote Farbstoffgemisch aus der Gruppe der Carotinoide Paprikaextrakt ist.

4.  Mehrfruchtgetränk nach Anspruch 3, dadurch gekennzeichnet, daß der Paprikaextrakt in einer Konzentration von 0,1 und 5,0 g/l, vorzugsweise zwischen 0,2 und 3,0 g/l und besonders bevorzugt in einer Konzentration von 0,4 bis 2,0 g/l eingesetzt wird.

5.  Mehrfruchtgetränk nach Anspruch 3 oder 4, dadurch gekennzeichnet, daß die Capsaicin-Konzentration des Paprikaextraktes höchstens 0,01% beträgt.

6.  Mehrfruchtgetränk nach einem der Ansprüche 2 bis 5, dadurch gekennzeichnet, daß die Konzentration des Capsanthins zwischen 0,003 g/l und 0,15 g/l und vorzugsweise zwischen 0,015 und 0,06 g/l beträgt.

7.  Mehrfruchtgetränk nach einem der vorangegangenen Ansprüche, dadurch gekennzeichnet, daß die Konzentration des Provitamin A in dem Mehrfruchtgetränk zwischen 0,0072 g/l und 0,055 g/l, vorzugsweise 0,025 g/l und 0,050 g/l, besonders bevorzugt 0,030 g/l und 0,042 g/l beträgt.

8. Mehrfruchtgetränk nach einem der vorangegangenen Ansprüche, dadurch gekennzeichnet, daß ein Absorptionsmaximum des Provitamins A im Bereich von 457 ± 5 nm liegt.

9. Mehrfruchtgetränk nach einem der Ansprüche 1, 7 oder 8, dadurch gekennzeichnet, daß das Provitamin A im wesentlichen all-trans-β-Carotin ist.

10. Mehrfruchtgetränk nach einem der vorangegangenen Ansprüche, dadurch gekennzeichnet, daß die nach DIN 6174 gemessenen L*-Werte zwischen 34 und 52, vorzugsweise zwischen 37 und 49 und besonders bevorzugt 43 ± 3 betragen.

11. Mehrfruchtgetränk nach einem der vorangegangenen Ansprüche, dadurch gekennzeichnet daß die nach DIN 6174 gemessenen a*-Werte zwischen 25 und 43, vorzugsweise zwischen 28 und 40 und besonders bevorzugt zwischen 34 ± 3 betragen.

12. Mehrfruchtgetränk nach einem der vorangegangenen Ansprüche, dadurch gekennzeichnet, daß die nach DIN 6174 gemessenen b*-Werte 48 und 66, vorzugsweise zwischen 51 und 63, und besonders bevorzugt 57 ± 3 betragen.

13. Mehrfruchtgetränk nach einem der vorangegangenen Ansprüche, dadurch gekennzeichnet, daß der Quotient b* zu a* der nach DIN 6174 gemessenen a* und b*-Werte zwischen 0,7 und 2,5, vorzugsweise zwischen 1,0 und 2,2 und besonders bevorzugt 1,5 ± 0,4 beträgt.

14. Mehrfruchtgetränk nach Anspruch 1, dadurch gekennzeichnet, daß es mit Vitamin C und/oder Vitamin E angereichert ist.

15. Mehrfruchtgetränk nach Anspruch 1, dadurch gekennzeichnet, daß die Ballaststoffe wenigstens teilweise cereale Ballaststoffe und vorzugsweise fein gemahlene Rohfasern sind, wobei Haferrohfaser mit ihrem ernährungsphysiologisch hohen Anteil an β-Glucanen in wesensbestimmenden Anteilen besonders bevorzugt ist.

16. Mehrfruchtgetränk nach einem der vorangegangenen Ansprüche, dadurch gekennzeichnet, daß die Ballaststoffe teilweise Pektine, vorzugsweise Citrus- und Apfelpektine, sind.

17. Verfahren zur Herstellung eines Mehrfruchtgetränks nach einem der Ansprüche 1 bis 16, dadurch gekennzeichnet, daß zunächst einerseits die wasserlöslichen bzw. wasserdispergierbaren Komponenten in einer wäßrigen Vorlösung und die öllöslichen Komponenten miteinander in einer öllöslichen Vorlösung getrennt voneinander hergestellt werden, diese Vorlösungen mit den weiteren Komponenten gemischt, hochdruckhomogenisiert und kurzzeiterhitzt werden (Grundstoff), gegebenenfalls weitere Fruchtsäfte und/oder -marke hinzugefügt werden, mit Wasser verdünnt und homogen gemischt und pasteurisiert wird.

# Figur 1

Aromaprofil: Mehrfruchtgetränk A und Vergleichsgetränk

Intensität (1=sehr schwach; 5=sehr stark)

Legend: □ Vergleichsgetränk ▣ Mehrfruchtgetränk A

Categories: Geruch Ananas, Geruch Erdbeere, Geruch fruchtig, Ananas, Banane, Birne, Erdbeere, Orange, Pfirsich, süß, sauer, fruchtig, sämig, Süßstoff

Aromaprofil: Mehrfruchtgetränk A und Vergleichsgetränk

Intensität
(1=sehr schwach;
5=sehr stark)

Mehrfruchtgetränk A

Vergleichsgetränk

Figur 2

EP 0 950 359 A1

8

Europäisches
Patentamt

**EUROPÄISCHER RECHERCHENBERICHT**

Nummer der Anmeldung

EP 98 12 0304

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO 97 05787 A (ASHOURIAN JAMSHID) 20. Februar 1997 (1997-02-20) | 1-16 | A23L2/02 A23L2/58 |
| Y | * Beispiel 4 * | 1-17 | |
| X | EP 0 571 653 A (ECKES AG) 1. Dezember 1993 (1993-12-01) * Beispiel 5 * | 1-16 | |
| X | US 5 290 605 A (SHAPIRA NIVA) 1. März 1994 (1994-03-01) * Beispiel 7 * | 1-16 | |
| Y | PATENT ABSTRACTS OF JAPAN vol. 015, no. 332 (C-0861), 23. August 1991 (1991-08-23) & JP 03 127970 A (T HASEGAWA CO LTD), 31. Mai 1991 (1991-05-31) * Zusammenfassung * | 1-17 | |

**RECHERCHIERTE SACHGEBIETE (Int.Cl.6)**

A23L

Der vorliegende Recherchenbericht wurde für alle Patentansprüche erstellt

| Recherchenort | Abschlußdatum der Recherche | Prüfer |
|---|---|---|
| MÜNCHEN | 20. August 1999 | Bendl, E |

**ANHANG ZUM EUROPÄISCHEN RECHERCHENBERICHT
ÜBER DIE EUROPÄISCHE PATENTANMELDUNG NR.**

EP 98 12 0304

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-08-1999

| Im Recherchenbericht angeführtes Patentdokument | Datum der Veröffentlichung | Mitglied(er) der Patentfamilie | Datum der Veröffentlichung |
|---|---|---|---|
| WO 9705787 A | 20-02-1997 | US 5849350 A<br>AU 6687996 A<br>EP 0845952 A<br>US 5879737 A | 15-12-1998<br>05-03-1997<br>10-06-1998<br>09-03-1999 |
| EP 0571653 A | 01-12-1993 | AT 131006 T<br>DE 59204605 D | 15-12-1995<br>18-01-1996 |
| US 5290605 A | 01-03-1994 | IL 90794 A<br>DE 4020874 A<br>IT 1240963 B | 15-03-1995<br>24-01-1991<br>27-12-1993 |
| JP 03127970 A | 31-05-1991 | KEINE | |

EPO FORM P0461

Für nähere Einzelheiten zu diesem Anhang : siehe Amtsblatt des Europäischen Patentamts, Nr. 12/82